# EUROPEAN PATENT SPECIFICATION

(11) **EP 1 720 414 B1**
(45) Date of publication and mention of the grant of the patent: **17.09.2008**
(21) Application number: 05710892.0
(22) Date of filing: 16.02.2005
(51) Int. Cl.: A21D 13/00, A21D 8/04, A21D 10/00, A21D 13/08

(54) **LAMINATED DOUGH PRODUCTS AND THE USE OF PROTEASE AT THE OUTER SURFACE TO IMPROVE CRISPINESS THEREOF AFTER BAKING**
BLÄTTERTEIGPRODUKTE UND DIE VERWENDUNG VON PROTEASE AN DER ÄUSSEREN OBERFLÄCHE ZUR VERBESSERUNG DER KNUSPRIGKEIT DIESER PRODUKTE NACH DEM BACKEN
PRODUITS À BASE DE PÂTES FEUILLETÉES ET L'UTILISATION DE PROTÉASE À LA SURFACE EXTÉRIEURE POUR AMÉLIORER LA CROUSTILLANCE APRÈS LA CUISSON

(30) Priority: 17.02.2004 EP 04075504
(43) Date of publication of application: 15.11.2006
(73) Proprietor: CSM Nederland B.V., 1112 XE Diemen (NL)
(72) Inventor: HARGREAVES, Neil Graham, Chester CH4 8AE (GB); BRINKER, Eva-Maria, D-48429 Rheine (DE); SCHARF, Udo, D-55413 Weiler (DE); PLIJTER, Johannes, Jozef, NL-3921 BA Elst (NL); PLIJTER, Johanna, NL-3921 BA Elst (NL); VAN SON, Matheus, Wilhelmus, Louis, Jozef, NL-3438 XP Nieuwegein (NL); NOORT, Martijn, Willem-Jan, NL-1221 KK Hilversum (NL); HUSCROFT, Simon, Christopher, NL-2252 TB Voorschoten (NL)
(74) Representative: van Westenbrugge, Andries
(86) International application number: PCT/NL2005/000111
(87) International publication number: WO 2005/077194

(56) References cited:
- EP-A- 1 350 432
- US-B1- 6 197 353
- SAI MANOHAR R ET AL: "EFFECT OF ALPHA-AMYLASE AND PROTEASE ON THE RHEOLOGICAL CHARACTERISTICS OF DOUGH AND QUALITY OF BISCUITS" ADVANCED IN FOOD SCIENCES, TECHNISCHE UNIVERSITAET MUENCHEN, MUENCHEN, DE, vol. 19, no. 1/2, 1997, pages 15-21, XP008015977 ISSN: 1431-7737
- OBEI L: "PUTTING ENZYMES TO WORK IN BAKERY APPLICATIONS" CEREAL FOODS WORLD, AMERICAN ASSOCIATION OF CEREAL CHEMISTS, ST. PAUL, MN, US, vol. 46, no. 9, September 2001 (2001-09), pages 396-398, XP008025029 ISSN: 0146-6283

## Description

### TECHNICAL FIELD OF THE INVENTION

The present invention relates to a method of preparing laminated dough products or part baked laminated dough products. The laminated dough products and part baked laminated dough products obtained by the present method offer the advantage that they can be baked to yield a product, e.g. a croissant, Danish pastry or puff pastry that will retain a crispy crust for a considerable period of time after baking and even after reheating of the baked product.

Another aspect of the invention relates to a laminated dough product or part baked laminated dough product that can be obtained by the aforementioned method.

### BACKGROUND OF THE INVENTION

The manufacture of bakery products such as croissants, Danish pastry and puff pastry commences with the preparation of laminated dough. After proving, the laminated dough is baked to yield a product with a crispy crust and a soft interior. The crispy crust is an important quality parameter of these baked laminated dough products. If crispiness is lacking, consumers will perceive the product as not being fresh.

The crust of freshly baked laminated dough products will loose its crispy nature over time. As a result, product quality is perceived to decrease rapidly. Furthermore, such baked products cannot be "refreshed" by reheating, particularly microwave reheating, as the crust properties will deteriorate as a result of reheating.

EP-A-1 350 432 teaches the use of protease to reduce staling, and the enzyme is mixed into the dough, not applied to the surface.

SAI MANOHAR R ET AL: "EFFECT OF A-AMYLASE AND PROTEASE ON THE RHEOLOGICAL CHARACTERISTICS OF DOUGH AND QUALITY OF BISCUITS" ADVANCED IN FOOD SCIENCES, TECHNISCHE UNIVERSITAET MUENCHEN, MUENCHEN, DE, vol. 19, no. 1/2, 1997, pages 15-21, XP008015977 ISSN: 1431-7737 teaches the effect of protease in biscuit-making.

OBEI L: "PUTTING ENZYMES TO WORK IN BAKERY APPLICATIONS" CEREAL FOODS WORLD, AMERICAN ASSOCIATION OF CEREAL CHEMISTS, ST. PAUL, MN, US, vol. 46, no. 9, September 2001 (2001-09), pages 396-398, XP008025029 ISSN: 0146-6283 teaches that protease is employed in baking to improve dough flow.

### SUMMARY OF THE INVENTION

The inventors have found unexpectedly that the crispy crust of baked laminated dough products will retain its crispy character for a prolonged period of time if protease or peptidase is applied to the outside of the laminated dough product or part baked laminated product prior to baking or bake off. The inventors have also observed that these baked products can suitably be reheated, e.g. in a microwave, to restore the original freshly baked characteristics without such reheating causing a loss of crust crispiness.

US 6,174,559 and US 6,197,353 describe film forming colloidal dispersions containing gluten-derived proteins and peptides that can be coated onto a variety of substrates to provide a glossy sheen to the substrate. The method for producing these gluten-derived colloidal dispersions comprises the steps of preparing an aqueous dispersion of gluten under agitating conditions; heating the product to gelatinize the starch contained in the gluten; hydrolysing essentially all starch within the dispersion with a starch hydrolysing enzyme; hydrolysing protein contained in the gluten using a protease under conditions sufficient to change the gluten dispersion viscosity. In addition, these US patents teach to heat the colloidal dispersion to inactivate the protease.

In addition, it is known in the bakery art to use proteases in the preparation of bread dough to improve handling properties and to produce a smooth dough. In continuous mix systems and extruded dough, proteases will give better dough handling with less wear and tear on the machines. The application of protease onto the outside surface of dough or part baked products has not been disclosed in the prior art.

Although the inventors do not wish to be bound by theory, it is believed that the protease present in the enzyme material will degrade proteins and/or peptides present in the outside layer of the (part baked) dough product. As a result of this degradation the characteristics of the outside layer of the dough are fundamentally changed as becomes evident after baking in the crust properties of the baked product and especially the crust behaviour during storage.

### DETAILED DESCRIPTION OF THE INVENTION

Accordingly, one aspect of the invention relates to a method of preparing a laminated dough product or part baked laminated dough product comprising:
a. mixing flour, water and optionally other bakery ingredients to form a dough;
b. laminating the dough to obtain a laminated dough product;
c. optionally part baking the laminated dough product; and
d. applying an enzyme material with proteolytic activity to the outside surface of the laminated dough product or the part baked laminated dough product.

The term "laminating" as used herein, refers to a process wherein the dough is flattened, e.g. by rolling, following which a material such as fat is applied to the flattened surface. For a single dough this sequence of steps is typically repeated at least 3 times.

The terminology "part baking" refers to the incomplete baking of a dough product resulting in a product that needs to be subjected to another baking step to yield a fully baked product. Typically, the part baked product does not exhibit the strong crispy crust that is typical of the fully baked product.

The terminology "enzyme material with proteolytic activity" as used herein refers to an edible material that can suitably be used in the food industry to deliver such enzyme activity to foodstuffs. The term does not encompass food materials, e.g. flour or yeast, that naturally contain some proteolytic activity but which are not suitable for delivering significant enzyme activity. The term "proteolytic activity" refers to the capability of an enzyme to split proteins or peptides into smaller peptides or amino acids.

The proteolytic activity of the enzyme material can suitably be expressed in terms of casein digestion units (CDU), which is determined by measuring the hydrolysis of casein under standardised conditions. A full description of this method is provided under the heading "METHODS".

Typically, the enzyme material employed in accordance with the present invention exhibits a proteolytic activity of at least 10³ CDU per gram of dry matter. Preferably, the enzyme exhibits a proteolytic activity of at least 10⁴ CDU, even more preferably of at least 10⁶ CDU per gram of dry matter. In addition, the proteolytic activity of the enzyme material preferably does not exceed 10⁹ CDU per gram of dry matter.

In another preferred embodiment of the invention, the enzyme material is applied to the outside surface of the product in an amount of at least 10 CDU, more preferably at least 50 CDU proteolytic activity per cm². Typically, the amount of proteolytic activity applied will not exceed 10⁴ CDU per cm². Here the amount of enzyme activity delivered to the surface is to be calculated on the basis of the surface area to which the enzyme material was actually applied.

The application of the enzyme material in accordance with the present invention causes degradation of proteins and/or peptides contained in the outside layer of the dough product or part baked product. This degradation results in an increase in free primary amino groups in the outside layer. Typically, following treatment of the outside of the product with the enzyme material, the content of primary amino groups in the top layer has increased by at least 5%, preferably by at least 7% in comparison to a non-treated product. Here the term "top layer" refers to the very thin (< 1 mm) outside layer of the product that is in direct contact with the surrounding atmosphere. Generally, the content of primary amino groups in the top layer will not increase by more than 80%, preferably by not more than 60% as a result of the present method. The concentration of primary amino groups in the dough, part baked product or crust of the fully baked product may suitably be determined by means of an ortho-phtaldialdehyde assay as described by Church et al. ("Spectrophotometric assay using o-phthal-dialdehyde for determination of proteolysis in milk and isolated milk proteins" Dairy Sci, (1983) 66, 1219-1227).

The enzyme material employed in the present process advantageously contains one ore more industrial enzymes that are approved for use in food and that exhibit considerable proteolytic activity, especially endopeptidase activity. The proteolytic enzymes in the present enzyme material may suitably be derived from plant, microbial or animals sources. Particularly preferred are enzymes derived from plant, fungal (in particular *Aspergillus*, more particularly *Aspergillus oryzae*) or bacterial sources (in particular *Bacillus*), botanical and fungal sources being most preferred. Preferably other enzyme activities are essentially absent. Examples of enzymes that are particularly suitable for use in the present method include papain, bromelain, ficin, trypsin, chymotrypsin, Corolase ^{™} and debitrase ^{™}.

In the present method the enzyme material may be applied by any technique that is suitable for depositing a relatively thin homogeneous layer onto the outside of the product. Suitable techniques, include spraying, brushing, pouring, dipping, sprinkling etc. Most preferably the enzyme material is applied by spraying, dipping or brushing. In a particularly preferred embodiment, the enzyme material is applied in the form of a liquid, preferably an aqueous suspension. Here the term liquid also encompasses highly viscous liquids that have the advantage that they will stick to the dough product or part baked dough product. It should be understood that the present invention also encompasses embodiments wherein the enzyme material is applied indirectly, e.g, by spraying or brushing the enzyme material onto the equipment that is used to shape the laminated dough.

In the preparation of the present dough the flour and water may suitably be combined with a variety of bakery ingredients, e.g. yeast, fat, eggs, sugar, salt and/or enzymes. Yeast is a particularly important ingredient that is commonly used in laminated dough products to create an open internal structure. To allow the yeast to deliver this functionality, the laminated dough is allowed to rest or prove for at least a few minutes before the dough is (part)baked or frozen.

The laminated dough product or part baked laminated dough product according to the invention is suitably manufactured by means of a method that employs the step of proving the laminated dough. The enzyme material may suitably be applied prior to or after such proving step. Applying the enzyme material prior to proving offers the advantage that the dough is less vulnerable and that the enzymes within the enzyme material are allowed sufficient time to degrade proteins and or peptides present in the exterior layer of the dough. Furthermore, if the enzyme material is applied prior to proving, less proteolytic activity may be required to achieve the same result as in case the enzyme material is applied later on in the manufacturing process.

Alternatively, the enzyme material is applied after proving. In this embodiment the dough product is advantageously frozen or (part)baked within a predetermined period of time after completion of the proving step, e.g. within 30 minutes. Thus, the impact of the protease treatment may be controlled effectively as both baking and freezing inhibit enzyme activity.

The term "proving" as used herein refers to a dough treatment that allows the yeast in the dough to exert it action under optimised conditions. Typically, proving involves placing the dough into a proving cabinet in which an elevated temperature and controlled humidity are maintained.

The advantages of the present method are particularly pronounced in laminated dough products selected from croissant dough, Danish pastry dough and puff pastry dough. Most preferably, the present laminated dough product is a croissant dough or a Danish pastry dough.

The inventors have found that the crust quality of the baked product may be further improved by applying the enzyme material to the outside surface of the laminated dough product or part baked laminated dough product in combination with one or more components selected from the group consisting of fat, cystein, casein and organic acids, cystein and casein being most preferred. In a particularly preferred embodiment the latter one or more components are incorporated into said enzyme material.

The present invention offers an important unexpected benefit in that the favourable crust properties of the fully baked laminated dough product are retained over a prolonged period of time even if the dough product or part baked product has been frozen and stored as such for a considerable period of time. Consequently, in a highly preferred embodiment, the laminated dough product or part baked laminated dough product is frozen and stored in frozen form for at least 1 day, preferably at least 3 days, following application of the enzyme material.

Another aspect of the invention relates to a laminated dough product or a part baked laminated dough product exhibiting proteolytic activity on the outside surface of the product and exhibiting significantly less proteolytic activity in the interior of the product, said interior of the product being located at least 2 cm away from the outside surface. The interior of the product may exhibit proteolytic activity because it contains bakery ingredients that naturally exhibit some proteolytic activity. Also, the dough may contain added enzymes that deliver proteolytic activity. However, in accordance with the present invention, the proteolytic activity inside the product is significantly lower than the same activity on the outside surface. Typically the proteolytic activity inside the product is at least 10 times, more preferably at least 50 times and most preferably at least 100 times lower than same activity on the outside surface.

Similarly, also the concentration of primary aminogroups in the outside layer of the dough product is significantly higher than in the product's interior. Typically, the concentration of primary aminogroups in the top layer is at least 5% higher, more preferably at least 7% higher than inside the product, the inside of the product being located at least 2 cm away from the outside surface.

It should be noted that the enhanced proteolytic activity does not need to be evident on the complete outside surface of the present (part baked) dough product. Indeed, it may be practical to only deliver the desired enzyme activity to the parts of the product that are visible when the product is lying on a flat surface. Typically, at least 30%, preferably at least 50% of the outside surface of the present laminated dough product or part baked laminated product will exhibit enhanced proteolytic activity as defined herein. Most preferably, at least 80% of the outside surface exhibits such enhanced enzyme activity.

As described herein before, the proteolytic activity on the outside surface preferably exceeds 10 CDU per cm². Again, these activities relate to the part of the outside of the product to which enzymes exhibiting these activities have been applied.

In a particular preferred embodiment the present laminated dough product or part baked laminated dough product is frozen, preferably deep frozen. The frozen product is suitably packaged in a material that carries instructions as to how to bake or bake off the product.

Yet another aspect of the invention relates to a method of preparing a baked product from a laminated dough or from a part baked laminated dough, said method comprising baking a laminated dough product or part baked laminated dough obtained by a method as defined herein before or by baking a dough product or part baked dough product as defined above.
The advantages of the invention are particularly evident if the baked product so obtained is characterised by a crust with a moisture content of less than 25 wt.%, preferably of less than 20 wt.%, even more preferably of less than 16 wt.%. The baked product obtained after baking the present laminated dough product or part baked laminated dough product retains a crispy crust even when stored for several days. In contrast, laminated dough products or part baked laminated dough products that are comparable to the present products, but which do not contain the added proteolytic activity on the dough surface, exhibit considerable crust softening during storage under comparable conditions.

A further aspect of the invention concerns a method of reheating a baked product, said method comprising reheating a baked product obtained from a method as defined above, preferably by microwave reheating. Surprisingly, it was found that the product obtained after baking can be reheated by microwave without destroying the crispy nature of the crust. The crust of conventional fully baked laminated dough products will rapidly loose its crispiness during microwave reheating. Hence, microwave reheating is not an option for refreshing these baked products and a conventional oven must be used to achieve this. As will be evident, microwave reheating offers the advantage that it is fast and convenient, but also, and more importantly, that it does not result in a rapid drying out of the product. Thus, the present invention provides a method of refreshing baked products from laminated dough by microwave reheating that yields reheated products that are essentially indistinguishable from freshly baked products.

Finally, the invention provides a new use of an enzyme material exhibiting proteolytic activity. More particularly, this aspect of the invention relates to the use of such an enzyme material for improving the crispiness of a baked laminated dough product, said use comprising applying the enzyme material to the outside surface of a laminated dough product or a part baked product prior to final baking.

### METHODS

The proteolytic activity of enzyme materials in terms of Casein Digestion Units (CDU) may be determined as follows:

A standard solution of casein (1 mg/ml) is prepared by dissolving 1.0 gm of dry casein in 200 ml distilled water. The solution is made basic by the addition of 50 ml 0.1 N NaOH and is heated with stirring for 15 minutes. 200 ml of distilled water is added to the solution which is cooled to about 30 °C and then neutralized by the addition of 200 ml 0.1 M KH₂PO₄ /Na2 HPO₄ buffer, pH 6.2. The solution is then adjusted to a final volume of 1 litre with distilled water. A working standard solution is made from a master standard solution with known activity in CDU per g. To every 100 ml of working standard solution, which is diluted to a final concentration of about 150 CDU/ml, is added 4 ml 0.1 M KH₂PO₄/Na₂HPO₄ buffer, pH 7.0 buffer and 1 ml 2% thiourea solution.

5.0 ml of the casein solution is added to a series of test tubes which are incubated at 30 °C for several minutes to bring them to temperature. To these tubes are added various volumes of the house standard solution and water so that they contain a range of concentrations of the house standard. The total volume of added standard solution and water added to all tubes is 1 ml. For example, a series of 5 standard tubes containing 30, 45, 60, 75 and 90 CDU of working standard and 5 ml of casein solution could be generated. After thorough mixing the tubes are incubated at 30 °C for 20 minutes and then placed in an ice water bath. 4 ml of sodium acetate/glacial acetic acid (0.6 gm per liter/2.0 ml litre), pH 3.85 is added to all the tubes which are mixed by swirling and then put back in the 30 °C water bath. The acid buffer reacts with partially digested casein to produce a colloidal haze which is fully developed within 5 minutes and changes only slightly over the next 10 minutes. Fifteen minutes after addition of acid buffer, transmission (%) readings are made using a photo-electric calorimeter with a 540 nm filter and the galvanometer set at 100% transmission with distilled water. Percent transmission obtained for each sample is plotted against CDU of enzyme in the sample to generate a standard curve. By interpolating transmission values obtained using unknown samples processed in the same way as the standards and appropriately correcting for dilution, it will be possible to establish the proteolytic activity in CDU per ml or gram of the unknown samples. It is to be understood that the assay method described above is provided by way of illustration and not by way of limitation, and that other known art accepted methods may be used.

### EXAMPLES

### Example 1

A conventional croissant dough is prepared by combining the dry ingredients, including flour, yeast, sugar and salt, with water. The resulting dough is extruded to form a continuous dough sheet. An extruded layer of margarine is deposited onto the upper surface of the dough sheet, following which the dough is laminated by repeated folding and rolling in a manner known per se. The entire flattening and laminating process, i.e., the "tours" of the process, is conducted at room temperature.

After a rest time, the dough is once again laminated through standard lamination equipment to its final thickness. After final lamination, the croissant is passed to a standard cutting and forming machine which forms croissants in the conventional three corner, triangular shape. Following this process, the triangles are formed into the rolled croissant shape.

The croissants thus obtained are randomly divided across groups A, B, C and D. An aqueous solution of 3 g/l Profix 200L (papain protease ex Quest International B.V.) is applied to the complete outside surface of the croissants of groups A and B by means of a brush in an amount equivalent to 0.03 mg enzyme preparation per cm². Water is applied onto the surface of the croissants of control group C and D in the same fashion.

All the croissants are then placed into a proving room to increase the volume of the croissants by about two to two and one-half times. After full proving, the croissants belonging to groups B and D are flash frozen in a flash freezer. Next, the frozen croissants are packaged and stored at about -20°C.

After proving, the croissants of groups A and C are placed into an oven that has been preheated to about 220 °C and are baked therein for about 15-20 minutes. The croissants of groups B and D are baked straight from the freezer under the same conditions for about 25 minutes after having been stored in frozen form for 3 weeks.

The crispiness of the croissants is evaluated by a trained sensory panel immediately after baking and subsequently every hour until 5 hours after baking. Immediately after baking the crispiness of the croissants from the different groups was found to be comparable. The crispiness of all products is found to decrease with time after baking. However, the crust of the croissants A and B is found to deteriorate much more slowly than that of croissants C and D.

### Example 2

Croissants A and C are prepared and baked in exactly the same manner as described in Example 1. The croissants are stored under ambient conditions for 24 hours. Next, the croissants are reheated in a microwave oven. The croissants A that had been pretreated with the protease solution are found to resemble a freshly baked product and exhibited a dry, crispy crust. In contrast, the croissants belonging to the control group B are found to have a soft, slightly wet crust.

### Example 3

Croissants B and D are prepared in exactly the same manner as described in Example 1, except that protease solution is applied immediately after the croissants have been formed into the rolled croissant shape. Before baking, the frozen croissants are thawed under ambient conditions and subsequently proved as described in Example 1. The results so obtained for croissants B and D are very similar to those described in Example 1.

### Example 4

Croissant dough was prepared according to the recipe shown in table 1. Flour, yeast, salt and emulsifier (temperature 5°C) were mixed dry in a Kemper SP15 spiral mixer for one minute at slow speed. The water (temperature 10°C), ascorbic acid (in solution) and diced margarine were added and mixed for 2 minutes. Afterwards, the dough was kneaded at high speed until a dough temperature of 20°C was reached (approximately 6 min.).

**Table 1: Dough recipe of the croissants**

| **Ingredient** | **Supplier** | **Amount (% on flour)** | **Amount (gram)** |
|---|---|---|---|
| Flour | Orchidee^{™}, Meneba | 100 | 3000 |
| Tap water | | 55.8 * | 1674 * |
| Dry yeast | Fermipan^{™} red, DSM | 2.7 | 80 |
| Consumption salt | Without iodine, Akzo Nobel | 2 | 60 |
| Margarine | Trio korst^{™}, Unipro | 10 | 300 |
| Emulsifier | Admul^{™} DATEM 1935, Quest | 0.5 | 15 |
| Ascorbic acid | Merck | 20 ppm | 20 ppm |

| | | | |
|---|---|---|---|
| * Water addition is corrected for the standard water absorption of the flour -2%. | | | |

The dough was laminated according to the recipe given in Table 2. The dough was rounded carefully by hand and left to rest at 5°C for 10 minutes. The roll-in margarine sheet (20 mm thick) was reduced to a square sheet with a thickness of 10 mm (gap size) using a Rondo Seewer. On the dough ball two diagonal cuts were made and the dough was unfolded to obtain a square sheet. The thickness of the dough sheet was reduced to 10 mm gap size. The margarine sheet was placed diagonally on top of the dough sheet and folded in.

**Table 2: Laminate recipe of the croissants**

| **Ingredient** | | **Amount (gram)** |
|---|---|---|
| Dough | (table 3.11) | 1700 |
| Roll-in margarine | Trio toer margarine sheets, Unipro | 500 |

Afterwards, the dough was laminated by giving the dough sheet one book turn: first reducing its thickness on 8 mm gap size (clock settings 30-25-20-15-12-8) and folded in four with overlapping dough edges. The laminate was left to rest at 7°C for 10 minutes. After turning it 90° clockwise, a second book turn was given, followed by again 10 minutes rest at 7°C.

The laminated dough was reduced on 3 mm gap size (clock settings 8-6-4.5-3.5-3) and square pieces of 7x7 cm were marked. Using the blunt side of a ruler the sides were pressed and squares were cut using a sharp knife. Fifteen square pieces were placed on a closed baking sheet and placed in the dough retarding cabinet (30°C and 99% RH) for 1 hour. Next, the surface of the dough pieces was brushed with an enzyme solution (see below) and after 5 minutes the treated pieces were transferred into a Rototherm^{™} oven and baked for 13 minutes at 215°C after steaming for 2 minutes. The oven settings are shown in table 3. The products were packaged in 20 µm LDPE bags after 1 hour of cooling.

**Table 3: Oven settings for baking the croissants**

| **Baking process** | **Rototherm settings** |
|---|---|
| Steam phase | 2 min. 1.5 litre |
| First baking phase | 12 min. 215 °C valve 0% |
| Second baking phase | 1 min. 215 °C valve 100% |

The impact of protease on the crust properties of the croissants was tested using the commercial proteases listed in Table 4. These enzymes were dissolved in water and sprayed onto the dough surface just before baking. The amount of enzyme preparation applied, varied between 3.8 and 5.4 mg/cm². The enzyme solutions used contained protease preparation in a concentration of 0.03% (w/w).

**Table 4: Overview of proteolytic enzymes used to influence the protein phase of the crust**

| **Trade name** | **Manufacturer** | **Details** |
|---|---|---|
| Corolase LAP | AB Enzymes | Leucine amino peptidase |
| Fermizyme B500 | DSM BI | Neutral bacterial protease, known from confectionary industry to act on gluten (softening effect, prevents shrinkage) |
| Fermizyme V100 | DSM BI | Papain, known from confectionary industry to act on gluten (softening effect, increases extensibility) |
| Protamex | Novo | A *Bacillus* protease complex for the hydrolysis of food proteins |
| Alcalase 2.4L | Novo | Food grade proteolytic enzyme derived from *Bacillus licheniformis*. Major component is Subtilisin A, which is an endoprotease of the serine type. |
| Flavourzyme 1000 L | Novo | Protease preparation derived from *Aspergillus oryzae*. Main activities in the preparation are: neutral/alkaline endoprotease activity; leucine and phenylalanine amino peptidase activity, acid carboxypeptidase activity and glutamic acid splitting activity |
| Profix 200 L | Quest | Papain, broad spectrum sulphydryl protease |

The baked products were assessed sensorically by an expert panel on crispiness, toughness and hardness of the crust. The three assessed attributes were scored on a scale of 0 to 10. The evaluations were performed 2 and 4 hours after baking. Table 5 shows the attributes and explains the values given by the expert panel. The decrease of these three values is a measure for the deterioration of the crust.

**Table 5: Attributes for sensory evaluation of the deterioration of the bread crust in time**

| **Attribute** | **Value = 0** | **Value = 10** |
|---|---|---|
| Crispiness of the crust | Limp | Crispy |
| Toughness of the crust | Extremely tough | Short bite |
| Hardness of the crumb | Soggy, very soft | Very dry/hard |

An overall crust freshness score was calculated from the above sensory attributes as the weighted average of these three attributes. The scores obtained for the enzyme treated croissants and non-treated croissants (control) are depicted in Tables 6a and 6b. Tables 6a and 6b describe the results obtained from two different baking trials.

**Table 6a: Crust freshness scores as a function of storage time**

| | **After 2 hrs** | **After 4 hrs** |
|---|---|---|
| Control | 4.2 | 2.7 |
| Corolase^{™} LAP | 6.2 | 3.0 |
| Fermizyme^{™} V100 | 4.8 | 1.8 |
| Fermizyme^{™} B500 | 5.7 | 2.9 |
| Protamex^{™} | 4.3 | 3.2 |

**Table 6b: Crust freshness scores as a function of storage time**

| | | |
|---|---|---|
| | **After 2 hrs** | **After 4 hrs** |
| Control | 6.0 | 2.7 |
| Alcalase^{™} | 7.3 | 4.7 |
| Flavourzyme^{™} 1000L | 6.8 | 5.7 |
| Profix^{™} 200L | 7.2 | 3.0 |

It is evident from the results presented in the above table that pre-treatment of the dough pieces with proteolytic enzymes has a favourable impact on the crust freshness scores during storage. In particular Corolase^{™} LAP, Fermizyme^{™} B500, Flavourzyme^{™} 1000L and Alcalase^{™} showed a significant effect on crust freshness after 2 hours of storage. After 4 hours of storage a substantial beneficial effect on crust freshness was observed for Flavourzyme^{™} 1000L and Alcalase^{™}.

## Claims

1. A method of preparing a laminated dough product or a part baked laminated dough product comprising:
a. mixing flour, water and optionally other bakery ingredients to form a dough;
b. laminating the dough to obtain a laminated dough product;
c. optionally part baking the laminated dough product; and
d. applying an enzyme material with proteolytic activity to the outside surface of the laminated dough product or the part baked laminated dough product.

2. Method according to claim 1, wherein the enzyme material exhibits a proteolytic activity of at least 10³ casein digestion units (CDU) per gram of dry matter.

3. Method according to claim 1 or 2, wherein the enzyme material is applied to the outside surface of the product in an amount of at least 10 CDU of proteolytic activity per cm².

4. Method according to any one of the preceding claims, wherein the enzyme material contains one or more botanical or fungal enzymes with proteolytic activtity.

5. Method according to any one of the preceding claims, wherein the enzyme material is applied in the form of a liquid, preferably an aqueous suspension.

6. Method according to any one of the preceding claims, wherein enzyme material is applied prior to proving.

7. Method according to any one of the preceding claims wherein the product is frozen and stored in frozen form for at least 1 day after the enzyme material has been applied.

8. A laminated dough product or part baked laminated dough product exhibiting proteolytic activity on the outside surface of the product and exhibiting significantly less proteolytic activity in the interior of the product, said interior of the product being located at least 2 cm away from said outside surface.

9. Product according to claim 8, wherein the proteolytic activity on the outside surface is at least 10 CDU per cm² and wherein the proteolytic activity inside the product is at least 10 times lower than the same activity on the outside surface, the inside of the product being located at least 2 cm away from said outside surface.

10. Product according to claim 8 or 9, wherein the product is frozen.

11. A method of preparing a baked product from a laminated dough or a part baked laminated dough, said method comprising baking a laminated dough product or a part baked laminated dough product obtainable by a method according to any one of claims 1-7 or a product according to any one of claims 8-10.

12. A method of reheating a baked product, said method comprising reheating a baked product obtainable from a method according to claim 11, preferably by microwave reheating.

13. Use of an enzyme material exhibiting proteolytic activity for improving the crispiness of a baked laminated dough product, said use comprising applying the enzyme material to the outside surface of a laminated dough product or a part baked laminated dough product prior to final baking.

## Patentansprüche

1. Ein Verfahren zur Herstellung eines mehrschichtigen Teigprodukts oder eines vorgebackenen mehrschichtigen Teigprodukts, umfassend:
a. Vermischen von Mehl, Wasser und gegebenenfalls anderen Backzutaten, um einen Teig zu bilden,
b. Schichten des Teigs, um ein mehrschichtiges Teigprodukt zu erhalten,
c. gegebenenfalls Vorbacken des mehrschichtigen Teigprodukts und
d. Auftragen eines Enzymmaterials mit proteolytischer Wirkung auf die äußere Oberfläche des mehrschichtigen Teigprodukts oder des vorgebackenen mehrschichtigen Teigprodukts.

2. Verfahren gemäß Anspruch 1, bei dem das Enzymmaterial eine proteolytische Wirkung von wenigstens 10³ Kasein-Verdauungseinheiten (CDU) pro Gramm Trockenmasse aufweist.

3. Verfahren gemäß Anspruch 1 oder 2, bei dem das Enzymmaterial auf die äußere Oberfläche des Produkts in einer Menge von wenigstens 10 CDU proteolytischer Wirkung pro cm² aufgetragen wird.

4. Verfahren gemäß irgendeinem der vorhergehenden Ansprüche, bei dem das Enzymmaterial ein oder mehrere Pflanzen- oder Fungusenzyme mit proteolytischer Wirkung enthält.

5. Verfahren gemäß irgendeinem der vorhergehenden Ansprüche, bei dem das Enzymmaterial in Form einer Flüssigkeit, vorzugsweise einer wässrigen Suspension, aufgetragen wird.

6. Verfahren gemäß irgendeinem der vorhergehenden Ansprüche, bei dem das Enzymmaterial vor dem Gehen aufgetragen wird.

7. Verfahren gemäß irgendeinem der vorhergehenden Ansprüche, bei dem das Produkt gefroren und in gefrorener Form wenigstens 1 Tag lang gelagert wird, nachdem das Enzymmaterial aufgetragen worden ist.

8. Ein mehrschichtiges Teigprodukt oder vorgebackenes mehrschichtiges Teigprodukt, das eine proteolytische Wirkung an der äußeren Oberfläche des Produkts aufweist und deutlich geringere proteolytische Wirkung im Inneren des Produkts aufweist, wobei das Innere des Produkts sich wenigstens 2 cm von der äußeren Oberfläche entfernt befindet.

9. Produkt gemäß Anspruch 8, wobei die proteolytische Wirkung an der äußeren Oberfläche wenigstens 10 CDU pro cm² beträgt und die proteolytische Wirkung im Inneren des Produkts wenigstens 10 Mal niedriger ist als die gleiche Wirkung an der äußeren Oberfläche, wobei das Innere des Produkts sich wenigstens 2 cm von der äußeren Oberfläche entfernt befindet.

10. Produkt gemäß Anspruch 8 oder 9, wobei das Produkt gefroren ist.

11. Ein Verfahren zur Herstellung eines gebackenen Produkts aus einem mehrschichtigen Teig oder einem vorgebackenen mehrschichtigen Teig, wobei das Verfahren das Backen eines mehrschichtigen Teigprodukts oder eines vorgebackenen mehrschichtigen Teigprodukts durch ein Verfahren gemäß irgendeinem der Ansprüche 1-7 oder eines Produkts gemäß irgendeinem der Ansprüche 8-10 umfasst.

12. Ein Verfahren zum Wiedererwärmen eines gebackenen Produkts, wobei das Verfahren das Wiedererwärmen eines durch ein Verfahren gemäß Anspruch 11 erhältlichen gebackenen Produkts vorzugsweise durch Wiedererwärmen durch Mikrowellen umfasst.

13. Verwendung eines Enzymmaterials, das eine proteolytische Wirkung aufweist, zur Verbesserung der Knusprigkeit eines gebackenen mehrschichtigen Teigprodukts, wobei die Verwendung das Auftragen des Enzymmaterials auf die äußere Oberfläche eines mehrschichtigen Teigprodukts oder eines vorgebackenen mehrschichtigen Teigprodukts vor dem Fertigbacken umfasst.

## Revendications

1. Procédé de préparation d'un produit à base de pâte feuilletée ou d'un produit à base de pâte feuilletée partiellement cuite,
comprenant les étapes consistant à :
a) mélanger de la farine, de l'eau et facultativement d'autres ingrédients de boulangerie pour former une pâte,
b) feuilleter la pâte pour obtenir un produit de pâte feuilletée,
c) facultativement faire cuire partiellement le produit de pâte feuilletée, et
d) appliquer une substance enzymatique à activité protéolytique sur la surface extérieure du produit de pâte feuilletée ou du produit de pâte feuilletée partiellement cuite.

2. Procédé selon la revendication 1,
selon lequel
la substance enzymatique présente une activité protéolytique d'au moins 10³ unités de digestion de caséine (UDC) par gramme de matière sèche.

3. Procédé selon la revendication 1 ou 2,
selon lequel
la substance enzymatique est appliquée à la surface extérieure du produit dans une proportion d'au moins 10 UDC d'activité protéolytique par cm².

4. Procédé selon l'une des revendications précédentes,
selon lequel
la substance enzymatique contient une ou plusieurs enzymes botaniques ou fongiques à activité protéolytique.

5. Procédé selon l'une des revendications précédentes,
selon lequel
la substance enzymatique est appliquée sous une forme liquide, de préférence sous la forme d'une suspension aqueuse.

6. Procédé selon l'une des revendications précédentes,
selon lequel
la substance enzymatique est appliquée préalablement pour essai.

7. Procédé selon l'une des revendications précédentes,
selon lequel
le produit est congelé et stocké sous forme congelée pendant au moins 1 jour après l'application de la substance enzymatique.

8. Produit à base de pâte feuilletée ou produit à base de pâte feuilletée partiellement cuite, présentant une activité protéolytique sur sa surface extérieure et une activité protéolytique nettement moindre à l'intérieur, l'intérieur du produit se situant à au moins 2 cm de la surface extérieure.

9. Produit selon la revendication 8,
selon lequel
l'activité protéolytique sur la surface extérieure du produit est d'au moins 10 UDC par cm², et
l'activité protéolytique à l'intérieure du produit est inférieure d'au moins 10 fois à celle de la surface extérieure, l'intérieur du produit se situant à au moins 2 cm de la surface extérieure.

10. Produit selon la revendication 8 ou 9,
selon lequel
le produit est congelé.

11. procédé de préparation d'un produit cuit à partir d'une pâte feuilletée ou d'une pâte feuilletée partiellement cuite,
comprenant
l'opération de cuisson d'un produit à base de pâte feuilletée ou d'un produit à base de pâte feuilletée partiellement cuite, pouvant être obtenu par un procédé selon l'une quelconque des revendications 1 à 7, ou
un produit selon l'une quelconque des revendications 8 à 10.

12. procédé de réchauffage d'un produit cuit,
comprenant
le réchauffage d'un produit cuit pouvant être obtenu par un procédé selon la revendication 11, de préférence par réchauffage à micro-ondes.

13. Utilisation d'une substance enzymatique présentant une activité protéolytique pour améliorer la croustillance d'un produit à base de pâte feuilletée cuite,
comprenant
l'application de la substance enzymatique à la surface extérieure d'un produit de pâte feuilletée ou d'un produit de pâte feuilletée partiellement cuite avant la cuisson finale.
